**Europäisches Patentamt**

**European Patent Office**

**Office européen des brevets**

(19)

(11) Veröffentlichungsnummer: **0 303 770 B1**

# EUROPÄISCHE PATENTSCHRIFT

(12)

(45) Veröffentlichungstag der Patentschrift:
24.07.91 Patentblatt 91/30

(51) Int. Cl.⁵: **B23D 61/02,** // B28D1/12

(21) Anmeldenummer: **88106804.3**

(22) Anmeldetag: **28.04.88**

(54) **Kreissägeblatt mit Geräuschdämpfungsnieten.**

(30) Priorität: **15.08.87 DE 8711116 U**

(43) Veröffentlichungstag der Anmeldung:
**22.02.89 Patentblatt 89/08**

(45) Bekanntmachung des Hinweises auf die
Patenterteilung:
**24.07.91 Patentblatt 91/30**

(84) Benannte Vertragsstaaten:
**AT BE CH DE ES FR GB GR IT LI LU NL SE**

(56) Entgegenhaltungen:
**WO-A-85/01242**
**US-A- 2 990 828**
**US-A- 3 107 706**

(73) Patentinhaber: **Firma Heinrich Mummenhoff**
**Leimholer Mühle 1-5**
**W-5608 Radevormwald 1 (DE)**

(72) Erfinder: **Mummenhoff, Heinrich**
**Am Hagen 20**
**W-5630 Remscheid (DE)**

(74) Vertreter: **Patentanwälte Dr. Solf & Zapf**
**Schlossbleiche 20 Postfach 13 01 13**
**W-5600 Wuppertal 1 (DE)**

EP 0 303 770 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 303 770 B1

## Beschreibung

Die vorliegende Erfindung betrifft ein Kreissägeblatt, bestehend aus einem kreisscheibenförmigen Stammblatt mit am Außenumfang verteilt angeordneten Schneidelementen sowie mit im wesentlichen radial angeordneten, am Außenumfang des Stammblattes randoffenen Segmentschlitzen, die auf ihren dem Außenumfang abgekehrten Seiten jeweils in einem Zahngrund enden, wobei das Stammblatt in seinem äußeren Umfangsbereich von aus einem Material mit einer im Vergleich zu Stahl höheren Dichte bestehenden Nieten durchsetzt ist.

Schnellaufende Kreissägeblätter strahlen im Leer- sowie Lastlauf Schall oft mit einem unzulässig hohen Pegel ab. Es können z.B. Geräuschpegel von bis zu 115 dB(A) erreicht werden, was eine unzulässige Überschreitung der durch die Verordnung über Arbeitsstätten auf 85(90) dB(A) festgelegten Grenze für den Beurteilungspegel darstellt. Die Ursachen der Schallentwicklung von schnellaufenden Kreissägeblättern im Leerlauf sind bekannt. Es handelt sich hauptsächlich um das Leerlaufrauschen und den Luftschall infolge von Biegeschwingungen. Geräusche im Lastlauf können durch Zerspankräfte, Reibkräfte und Impulskräfte oder auch durch aeroelastische Anregungen entstehen. Geräuscheinflußgrößen sind im wesentlichen die Sägeblattgrößen, wie Stammblattdicke, Durchmesser, Masse, Richtzustand und Dämpfung sowie die Leistung als Betriebsgröße.

Die US-A-2 990 828 beschreibt bereits ein Kreissägeblatt, dessen Stammblatt im äußeren Umfangsbereich von Nieten durchsetzt ist, und zwar besitzt hier jeder Segmentschlitz einen erweiterten Zahngrundbereich, in dem einer der Nieten sitzt. Der Hintergrund dieser Ausgestaltung ist jedoch folgender. Die zwischen den einzelnen Schneidelementen gebildeten, radialen Segmentschlitze dienen insbesondere als "Ausdehnungsschlitze", die wärmebedingte Ausdehnungen des Stammblattes in umfänglicher Richtung "aufnehmen" und so verhindern, daß der Umfang "wellig" und uneben wird. Dabei besteht nun aber die Gefahr, daß aufgrund der Segmentschlitze Risse oder Brüche im Zahngrundbereich auftreten. Dies soll durch kreis- oder teilkreisförmige Erweiterungen im Zahngrundbereich verhindert werden, wobei aber weiterhin durch diese Erweiterungen ein sehr lautes, schrilles Laufgeräusch (Pfeifen) verursacht wird. Dies soll nun beseitigt werden, indem die Erweiterungen mit den Nieten ausgefüllt und hierdurch die in den Erweiterungen vorhandene Luft "verdrängt" wird. Diese bekannte Geräuschdämpfungsmaßnahme beseitigt daher allenfalls diejenigen Geräusche, die durch die sich an die Segmentschlitze anschließenden Erweiterungen und die hierin vorhandene Luft verursacht würden. Demzufolge ist das bekannte Kreissägeblatt aber hinsichtlich der im übrigen auftretenden Lauf- und Arbeitsgeräusche noch nicht optimal geräuschreduziert.

Aus der US-A-3 107 706 ist ein Kreissägeblatt bekannt, welches zwischen einigen seiner Zähne ebenfalls Segmentschlitze, d.h. sogenannte Ausdehnungsschlitze aufweist, die ebenfalls umfängliche, wärmebedingte Ausdehnungen des Blattes ermöglichen. Auch hier endet jeder Schlitz in einer Erweiterung bzw. einem Loch, welches zur Reduzierung des Laufgeräusches mit einem Einsatz (= Niet) ausgefüllt ist.

Es sind noch weitere Maßnahmen bekannt, die den Geräuschpegel bei Kreissägeblättern herabsetzen sollen. So ist in der EP-A-0 141 042 bzw. der DE-OS 33 46 321 ein Kreissägeblatt beschrieben, dessen Stammblatt von mehreren Spannungsausgleichsschlitzen durchsetzt ist, die neben einer Herabsetzung von Spannungen eine Unterbrechung von auftretenden Schallschwingungen und hierdurch eine Lärmverminderung bewirken sollen. Dieses bekannte Kreissägeblatt weist durch die Schlitze zwar sehr gute Laufeigenschaften auf, jedoch konnte die o.a. Grenze von 85 dB(A) bisher noch nicht unterschritten werden.

Aus der DE-PS 29 28 489 ist ein Kreissägeblatt bekannt, bei dem zur Geräuschdämpfung ein kreisscheibenförmiger Stützring in einer konzentrischen, kreisringförmigen Vertiefung des Stammblattes angeordnet ist. Diese Ausbildung ist zwar hinsichtlich der Geräuschdämpfung bereits sehr effektiv, jedoch herstellungsmäßig relativ teuer.

Der vorliegenden Erfindung liegt die Aufgabe zugrunde, ein Kreissägeblatt der eingangs beschriebenen Art zu schaffen, das hinsichtlich der Geräuschdämpfung weiter verbessert, dabei jedoch gleichzeitig preiswert herzustellen ist.

Erfindungsgemäß wird dies dadurch erreicht, daß die Nieten derart in jeweils über Verbindungsschlitze mit den Segmentschlitzen verbundenen Hinterbohrungen von zumindest einer Teilmenge der Segmentschlitze angeordnet sind, daß durch die Verbindungsschlitze im Bereich der Nieten eine geräuschmindernde Grenzflächenreibung auftritt, und daß das Stammblatt zusätzlich in seinem inneren Flächenbereich von mehreren Spannungsausgleichsschlitzen durchsetzt ist.

Die erfindungsgemäße Geräuschdämpfung beruht somit insbesondere auf einer Grenzflächenreibung einerseits zwischen dem Material des Stammblattes und den Nieten sowie andererseits auch zwischen den beidseitig der Verbindungsschlitze liegenden Bereichen des Stammblattes. Zusätzlich hierzu besitzt das erfindungsgemäße Kreissägeblatt im inneren Flächenbereich des Stammblattes mehrere Spannungsausgleichsschlitze, wodurch insgesamt eine besonders effektive Geräuschdämpfung erreicht wird.

2

Zudem wird auch durch die Nieten eine weitere Dämpfung durch eine Veränderung der Masseverteilung innerhalb des Stammblattes erreicht, da sich hierdurch auch die Resonanzeigenschaften des Kreissägeblattes ändern. Durch die Erfindung läßt sich somit auf einfache Weise bei geringen Herstellungskosten die angestrebte Grenze 85 dB(A) unterschreiten.

Weitere vorteilhafte Ausgestaltungsmerkmale der Erfindung sind in den Unteransprüchen enthalten.

Anhand der Zeichnung soll im folgenden die Erfindung beispielhaft näher erläutert werden. Dabei zeigen:

Fig. 1    eine erste Ausführungsform eines erfindungsgemäßen Kreissägeblattes in Draufsicht,

Fig. 2    einen Schnitt längs der Linie II-II in Fig. 1,

Fig. 3    eine Teil-Draufsicht einer zweiten Ausführungsform eines erfindungsgemäßen Kreissägeblattes und

Fig. 4    eine vergrößerte Detaildarstellung des Bereichs IV gemäß Fig. 1 ohne Darstellung des Nietes.

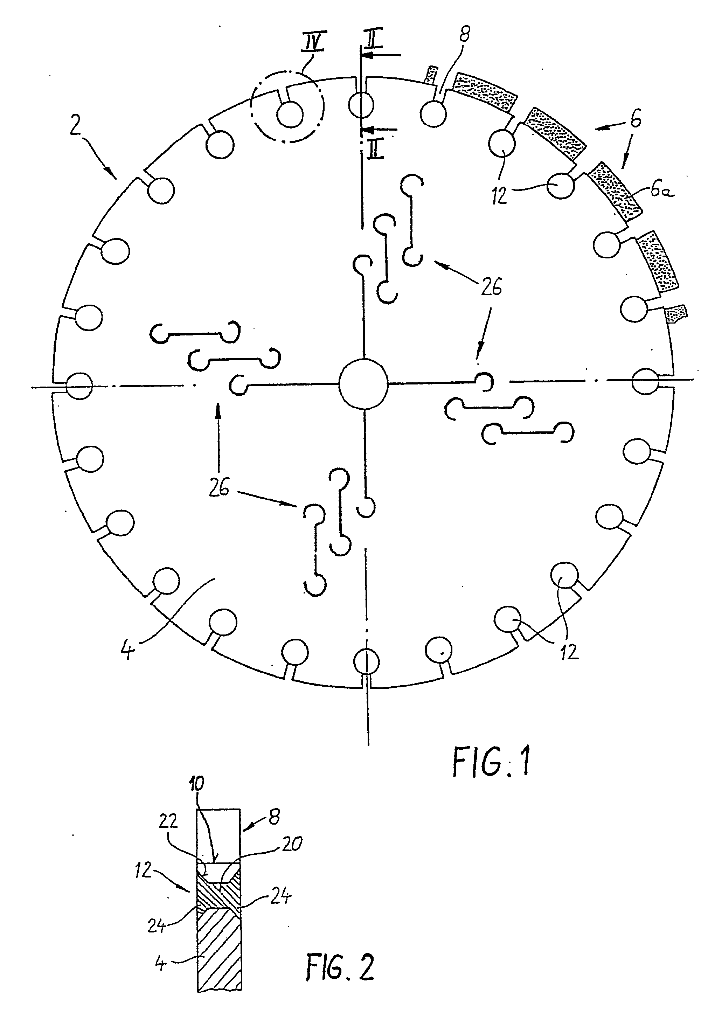

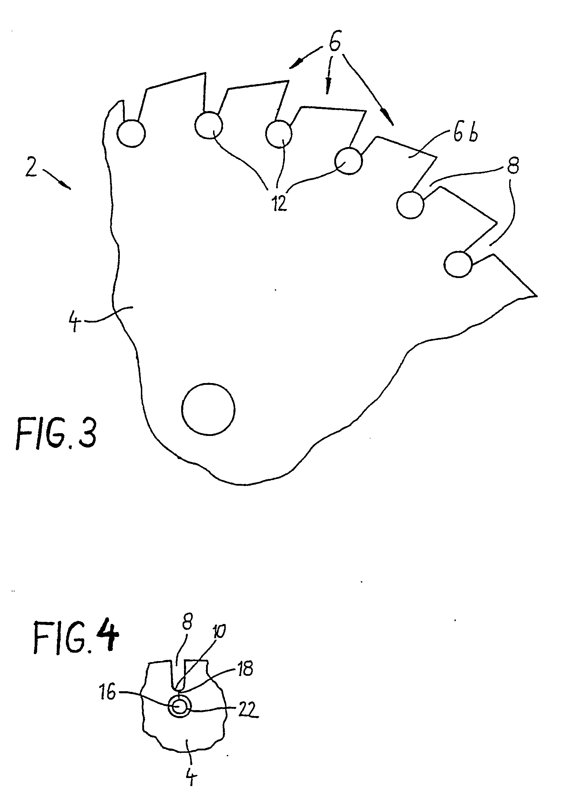

Ein erfindungsgemäßes Kreissägeblatt 2 besteht aus einem kreisscheibenförmigen Stammblatt 4, das an seinem Außenumfang verteilt angeordnete Schneidelemente 6 aufweist. Diese Schneidelemente 6 können zur Bearbeitung von Stein z.B. als diamantbesetzte Schneidsegmente 6a (Fig. 1) oder zur Bearbeitung von z.B. Stahl oder Holz als geschliffene Schneidsegmente bzw. -zähne 6b (Fig. 3) ausgebildet sein. Zwischen den Schneidelementen 6 befinden sich am Außenumfang des Stammblattes 4 im wesentlichen radiale, randoffene Segmentschlitze 8, wobei jeder Segmentschlitz 8 auf seiner dem Außenumfang des Stammblattes 4 abgekehrten Seite in einem Zahngrund 10 (siehe Fig. 4) endet.

Erfindungsgemäß ist das Stammblatt 4 in seinem äußeren Umfangsbereich von Nieten 12 durchsetzt, und zwar ist es wesentlich, daß diese Nieten 12 innerhalb von zumindest einer Teilmenge der Segmentschlitze 8, d.h. unmittelbar im Anschluß an deren Zahngrund 10 angeordnet sind. Vorzugsweise weist das Stammblatt 4 im Bereich jedes Segmentschlitzes 8 einen Niet 12 auf.

Erfindungsgemäß sind die Nieten 12 in Hinterbohrungen 16 der Segmentschlitze 8 angeordnet, wie es in Fig. 4 dargestellt ist. Ferner sind die Hinterbohrungen 16 erfindungsgemäß über Verbindungsschlitze 18 mit den Segmentschlitzen 8 verbunden. Hierdurch werden einerseits die Nieten 12 auch bei hohen Zentrifugalkräften sicher gehalten, und andererseits wird durch die Verbindungsschlitze 18 auch die Grenzflächenreibung zwischen dem Material des Stammblattes 4 und den Nieten 12 begünstigt, so daß eine effektive Geräuschminderung erreicht wird.

Wie insbesondere aus Fig. 2 erkennbar ist, weisen die Nieten 12 erfindungsgemäß jeweils einen zylindrischen Niethals 20 sowie zwei in Ansenkungen 22 (siehe auch Fig. 4) des Stammblattes 4 sitzende Senkköpfe 24 auf.

Um eine besonders gute Geräuschdämpfung zu erreichen, ist es vorteilhaft, wenn die Nieten 12 aus einem spezifisch schweren Material, z.B. aus einem Metall mit einer im Vergleich zu Stahl höheren Dichte bestehen. Besonders geeignet ist Kupfer, das eine Dichte von 8,9 kg/dm$^3$ (Stahl ca. 7,8 kg/dm$^3$) aufweist und gleichzeitig sehr gut zu verarbeiten ist.

Das in Fig. 1 dargestellte Kreissägeblatt 2 weist zusätzlich zu den umfänglichen Nieten 12 an sich bekannte Spannungsausgleichsschlitze 26 auf. Dabei ist es besonders vorteilhaft, daß sich die Wirkungen beider Maßnahmen hinsichtlich der Geräuschreduzierung addieren, so daß die angestrebte Grenze von 85 dB(A) unterschritten werden kann.

Erfindungsgemäß sollen zwar die Nieten 12 möglichst weit außen angeordnet sein, um eine besonders gute Geräuschdämpfung zu erreichen. In der Praxis sollte jedoch ein radialer Abstand zwischen den Nieten 12 und dem Außenumfang des Stammblattes 4 eingehalten werden, um ein automatisches Auflöten der Schneidsegmente 6a zu ermöglichen, da Lötvorrichtungen üblicherweise mit einer Lichtschranke arbeiten, die die Segmentschlitze 8 zur Positionierung des Kreissägeblattes erfassen. Durch die erfindungsgemäße Maßnahme, die Nieten 12 im Anschluß an den Zahngrund 10 anzuordnen, wird vorteilhafterweise diese Funktion durch einen stets noch verbleibenden Rest des Segmentschlitzes 8 gewährleistet, und zwar insbesondere dann, wenn die sich aus der folgenden Tabelle ergebenden Abmessungen in der Praxis eingehalten werden.

| Stammblattdurchmesser in mm | Niethalsdurchmesser in mm |
| --- | --- |
| bis 800 | 8 |
| 800 bis 1.600 | 12 |
| über 1.600 | 16 - 20 |

Diesen Angaben liegen folgende Schlitzabmessungen zugrunde :

| Stammblattdurchmesser in mm | Länge der Segmentschlitze (= sog. Zahntiefe) in mm |
|---|---|
| 200 bis 800 | 14 – 19 |
| 800 bis 2.000 | 25 |
| über 2.000 | 30 |

Dabei wird durch die Zahntiefe auch eine Heizzone für den Auflötvorgang der Segmente 6 geschaffen.

## Patentansprüche

1. Kreissägeblatt, bestehend aus einem kreisscheibenförmigen Stammblatt (4) mit am Außenumfang verteilt angeordneten Schneidelementen (6) sowie mit im wesentlichen radial angeordneten, am Außenumfang des Stammblattes (4) randoffenen Segmentschlitzen (8), die auf ihren dem Außenumfang abgekehrten Seiten jeweils in einem Zahngrund (10) enden, wobei das Stammblatt (4) in seinem äußeren Umfangsbereich von aus einem Material mit einer im Vergleich zu Stahl höheren Dichte bestehenden Nieten (12) durchsetzt ist, **dadurch gekennzeichnet,** daß die Nieten (12) derart in jeweils über Verbindungsschlitze (18) mit den Segmentschlitzen (8) verbundenen Hinterbohrungen (16) von zumindest einer Teilmenge der Segmentschlitze (8) angeordnet sind, daß durch die Verbindungsschlitze (18) im Bereich der Nieten (12) eine geräuschmindernde Grenzflächenreibung auftritt, und
daß das Stammblatt (4) zusätzlich in seinem inneren Flächenbereich von mehreren Spannungsausgleichsschlitzen (26) durchsetzt ist.

2. Kreissägeblatt nach Anspruch 1, **dadurch gekennzeichnet,** daß das Stammblatt (4) im Bereich jedes Segmentschlitzes (8) eine Hinterbohrung (16) mit einem Niet (12) aufweist.

3. Kreissägeblatt nach Anspruch 1 oder 2, **dadurch gekennzeichnet,** daß die Nieten (12) jeweils einen zylindrischen Niethals (20) sowie zwei in Ansenkungen (22) des Stammblattes (4) sitzende Senkköpfe (24) aufweisen.

4. Kreissägeblatt nach einem oder mehreren der Ansprüche 1 bis 3, **dadurch gekennzeichnet,** daß die Nieten (12) aus Kupfer bestehen.


## Revendications

1. Lame de scie circulaire, comprenant une lame maîtresse (4) ayant la forme d'un disque circulaire sur la circonférence extérieure de laquelle sont disposés des éléments de coupe (6), ainsi que des fentes délimitant des segments (8), ouvertes vers le bord de la circonférence extérieure, qui se terminent respectivement sur leurs côtés opposés à la circonférence extérieure, dans le fond (10) d'une dent, des rivets (12), réalisés en une matière à densité plus élevée que celle de l'acier, étant répartis dans la région de la circonférence extérieure de la lame maîtresse (4), caractérisée par le fait que les rivets (12) sont disposés dans des alésages dépouillés (16), respectivement reliés par des fentes de connexion (18) à au moins une partie des fentes (8), de manière à ce qu'il se produise, grâce aux fentes de connexion (18), dans la région des rivets (12) un frottement de surfaces limites qui diminue le bruit et que plusieurs fentes d'équilibrage de la tension (26) sont en outre réparties dans la région de la surface intérieure de la lame maîtresse (4).

2. Lame de scie circulaire selon la revendication 1, caractérisée par le fait que la lame maîtresse (4) présente, dans la région de chaque fente qui délimite des segments, un alésage dépouillé (16) contenant un rivet.

3. Lame de scie circulaire selon la revendication 1 ou 2, caractérisée par le fait que les rivets (12) présentent respectivement un col cylindrique (20), ainsi que deux têtes fraisées (24), disposées dans des chanfreinages (22) de la lame maîtresse (4).

4. Lame de scie circulaire selon l'une ou plusieurs revendications 1 à 3, caractérisée par le fait que les rivets (12) sont en cuivre.


## Claims

1. Circular saw blade comprising a circular disc-type main blade (4), having cutting elements (6) arranged distributed around the outer circumference, and having, in a substantially radial arrangement on the outer circumference of the main blade (4), segmental slots (8) open at the edge and ending respectively, on their sides remote from the outer circumference, in a tooth base (10), the main blade (4) being penetrated in its outer circumferential region by rivets (12) comprising a material with a density high in comparision to that of steel, characterised in that the rivets (12) are arranged in rear bores (16), respectively connected via connection slots (18) to the segmental slots (8), of at least some of the segmental slots (8), such that a silencing interfacial friction occurs in the region of the rivets (12) by means of the connection slots (18), and in that the main blade (4) is in addition penetrated in its inner surface area by a plurality of tension-regulating slots (26).

2. Circular saw blade according to Claim 1, characterised in that the main blade (4) has in the region of each segmental slot (8) a rear bore (16) with a rivet (12).

3. Circular saw blade according to Claim 1 or 2, characterised in that the rivets (12) respectively have a cylindrical rivet neck (20) and two countersunk heads (24) seated in counterbores (22) of the main blade (4).

4. Circular saw blade according to one or more of Claims 1 to 3, characterised in that the rivets (12) comprise copper.

FIG. 1

FIG. 2

FIG.3

FIG.4